# EUROPÄISCHE PATENTSCHRIFT

(11) **EP 1 749 605 B1**
(45) Veröffentlichungstag und Bekanntmachung des Hinweises auf die Patenterteilung: **28.12.2011**
(21) Anmeldenummer: 06014655.2
(22) Anmeldetag: 14.07.2006
(51) Int. Cl.: B23G 7/02, B23G 7/00

(54) **Werkzeug und Verfahren zur Erzeugung oder Nachbearbeitung eines Gewindes**
Tool and method for the production or the finition of a thread
Outil et procédé pour la réalisation ou la finition d'un filetage

(30) Priorität: 04.08.2005 DE 102005037309
(43) Veröffentlichungstag der Anmeldung: 07.02.2007
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, Dipl.-Ing., 91207 Lauf (DE); Hechtle, Dietmar, Dipl.-Ing., 91257 Pegnitz (DE)
(74) Vertreter: Schröer, Gernot H.

(56) Entgegenhaltungen:
- WO-A1-02/094491
- DE-A1- 10 238 775
- DE-A1- 19 817 018

## Beschreibung

Die Erfindung betrifft ein Werkzeug gemäß dem Oberbegriff des Anspruchs 1 sowie ein Verfahren zur Erzeugung oder Nachbearbeitung eines Gewindes.

Ein solches Werkzeug ist aus DE 102 38 775 A1 bekannt.

Zur Gewindeerzeugung oder Gewindenachbearbeitung sind neben spanabhebenden auch spanlose Verfahren und Gewindewerkzeuge bekannt. Spanlose Verfahren weisen gegenüber spanabhebenden Verfahren den Vorteil hoher statischer und dynamischer Festigkeit auch bei größeren Gewindetiefen auf, da die Werkstofffasern nicht zerschnitten werden. Zudem fallen keine Späne an, und die Standzeiten sind in der Regel höher als bei spanenden Gewindebohrern.

Einen Überblick über im Einsatz befindliche Gewindeerzeugungswerkzeuge und Arbeitsverfahren gibt das Handbuch der Gewindetechnik und Frästechnik, Herausgeber: EMUGE-FMNKEN, Verlag: Publicis Corporate Publishing, Erscheinungsjahr: 2004 (ISBN 3-89578-232-7*),* im Folgenden nur als "EMUGE-Handbuch" bezeichnet.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404), Gewindefurcher sind axial zu ihrer Werkzeugachse arbeitende Gewindewerkzeuge mit einem an einem Werkzeugschaft ausgebildeten Arbeitsbereich, der eine schraubenförmige die Werkzeugachse umlaufende Wirkfläche aufweist, mit der das Gewinde bei Drehung des Werkzeugs um die Werkzeugachse und axialem Vorschub entlang der Werkzeugachse in das Werkstück eingedrückt wird.

In DE 102 38 775 A1 ist ein Spanlos-Gewindeformer beschrieben, der ein schraubenförmiges Außengewinde mit abwechselnd verbundenen Rändern und Aussparungen aufweist. Bei der Erzeugung eines Gewindes wird der Spanlos-Gewindeformer spiralförmig in ein vorbereitetes Loch eines Werkstück bewegt.

Aus WO 02/094491 A1 sind ein spanlos atbeitendes Gewindeformwerkzeug und ein Verfahren zur spanlosen Gewindeerzeugung bekannt, die auf einem anderen, als Zirkulargewindeformen bezeichenbaren Arbeitsprinzip beruhen. Das in WO 02/094491 A1 offenbarte Gewindeformwerkzeug ist langgestreckt und umfasst einen Arbeitsbereich mit einem oder mehreren durch Ringnuten voneinander getrennten ringförmigen Umfangsprofilen(en). Jedes Umfangsprofil ist in seinem Zentrum nicht-kreisförmig ausgebildet und weist wenigstens drei Erhebungen nach Art eines Polygons als Drückstollen auf. Zusätzlich können auch axial verlaufende Nuten zwischen den einzelnen Drückstollen an der Außenfläche des Werkzeugs zum Zuführen von Kühlflüssigkeit vorgesehen sein. Als Material für das Werkzeug wird entweder ein Carbid oder Schnellstahl vorgeschlagen.

Dieses Werkzeug wird nun bei dem Verfahren gemäß WO 02/094491 A1 unter Drehung um seine eigene Achse in eine Bohrung mit größerem Durchmesser als das Werkzeug eingeführt und vollführt eine kreisförmige Bewegung entlang des Umfangs der Bohrung sowie zugleich eine Vorschubbewegung in die Bohrung und formt dadurch spanlos das Gewinde in der Bohrung.

Das Gewinde wird gemäß WO 02/094491 A1 also, im Gegensatz zum axialen Gewindefurchen, nicht mittels einer spiralförmigen, der Gewindesteigung angepassten Wirkfläche am Werkzeug und einer nur axialen oder linearen Vorschubbewegung des Werkzeugs kombiniert mit einer Drehung um die eigene Werkzeugachse geformt, sondern mittels ringförmiger und damit steigungsloser und zugleich im Querschnitt polygonaler Wirkflächen am Werkzeug einerseits und einer mit einer Drehung des Werkzeugs um die eigene Längsachse kombinierten schraubenförmigen Bewegung des Werkzeugs, die aus einer linearen Vorschubbewegung axial zur Längsachse des Werkzeugs und einer Zirkularbewegung der Längsachse des Werkzeugs um eine Mittelachse der Bohrung resultiert, andererseits.

Dieser Gewindeformer wird im Folgenden auch als Zirkulargewindeformer oder, unter Erweiterung der bislang üblichen Nomenklatur, als Zirkulargewindefurcher und das zugehörige Verfahren als Zirkulargewindeformen oder Zirkulargewindefurchen bezeichnet.

Ein weiterer Zirkulargewindeformer ist auch aus der DE 103 18 203 A1 bekannt. Dieser bekannte Zirkulargewindeformer weist zumindest einen, vorzugsweise zumindest zwei Profilvorsprünge an seinem Formkopf auf, die über den Umfang durchgehend und mit sich über den Umfang veränderndet radialer Erstreckung polygon ausgebildet sind. Die Profilvorsprünge bilden dadurch über den Umfang jeweils mehrere Drückstollen, die über den Umfang gleichmäßig oder auch ungleich verteilt sein können. Die Drückstollen benachbarter Profilvorsprünge können ferner in Umfangsrichtung zueinander, insbesondere entlang einer Wendel, versetzt sein.

Die Formkeile oder Drückstollen bei diesen bekannten Zirkulargewindeformern weisen jeweils zwei Seitenbereiche (oder: Flankenbereiche) und einen am weitesten nach außen ragenden Zentralbereich (oder: Scheitelbereich, Kopfbereich) auf. Die radialen Abstände der Seitenbereiche von der Werkzeugdrehachse nehmen in gleicher Weise zum Zentralbereich hin zu, die Drückstollen sind also bezüglich einer durch den Zentralbereich verlaufenden Symmetrieebene spiegelsymmetrisch aufgebaut.

Um Zeit bei der Herstellung des Gewindes zu sparen, wird der Formkopf des Zirkulargewindeformers, der Zirkulargewindeformer-Arbeitsbereich, mit möglichst vielen axial nacheinander angeordneten Drückstollen ausgeführt, vorzugsweise über die gesamte Länge des Gewindes. Bei Zirkulargewindeformern mit vielen axial nacheinander angeordneten Drückstollen entsteht jedoch im Kontaktbereich zum Werkstück eine relativ hohe Reibung. Die hohe Reibung führt dazu, dass die Standzeiten des Werkzeugs verkürzt werden.

Zur Reduzierung der Reibung kann der Zirkulargewindeformer mit verkürztem Formkopf ausgeführt werden, also die Zahl der axial nacheinander angeordneten Drückstollen reduziert werden und nach einer schraubenförmigen Rotationsbewegung des Werkzeugs entlang des Umfangs der Bohrung jeweils eine Neupositionierung des Zirkulargewindeformers durch eine axiale Verschiebung um eine Anzahl von Gewindegängen, die der Anzahl der axial nacheinander auf dem Formkopf angeordneten Drückstollen entspricht, dutchgeführt werden. Diese axiale Neupositionierung spart Bearbeitungszeit gegenüber einer kontinuierlichen Weiterbearbeitung des Werkstücks ein, zudem werden die Gewindegänge nicht unnötigerweise mehrfach durch die Drückstollen bearbeitet.

Die Neupositionierung erhöht jedoch die Komplexität des Steuerungsvorgangs für den Zirkulargewindeformer, zudem erhöht sich der Zeitaufwand gegenüber einer Bearbeitung des Werkstücks mit einem über die gesamte Länge des Gewindes Drückstollen aufweisenden Werkzeug und somit die Kosten für die Herstellung des Gewindes.

Aus DE 198 17 018 A1 ist ein Gewindefräser mit Fräszahnen bekannt, die in axialer Richtung unterschiedliche Abstände aufweisen. Das Gewinde wird hier jedoch nicht durch Formen, sondern durch Fräsen erzeugt. Deshalb gibt die DE 198 17 018 A1 keine Hinweise auf das Problem der Reibung und wie sich bei spanloser formender Erzeugung eines Gewindes mit hoher statischer und dynamischer Festigkeit die auf das Werkzeug wirkende Reibung verringern lässt.

Es ist daher Aufgabe der Erfindung, ein neues Werkzeug mit Zirkulargewindeformer-Arbeitsbereich und ein neues Verfahren zur Erzeugung oder Nachbearbeitung eines Gewindes durch Zirkulargewindeformen mit geringem Zeitaufwand anzugeben, bei dem sich die auf den Zirkulargewindeformer-Arbeitsbereich wirkende Reibung verringern lässt.

Diese Aufgabe wird hinsichtlich des Werkzeugs mit den Merkmalen des Patentanspruchs 1 und hinsichtlich des Verfahrens mit den Merkmalen des Anspruchs 18 gelöst. Vorteilhafte Ausgestaltungen und Weiterbildungen des Werkzeugs und des Verfahrens gemäß der Erfindung ergeben sich aus den von Anspruch 1 bzw. Anspruch 18 jeweils abhängigen Ansprüchen.

Gemäß Anspruch 1 wird ein Werkzeug zur Erzeugung oder Nachbearbeitung eines Gewindes vorgeschlagen,
a1) das um seine Werkzeugachse drehbar ist,
a2) mit einer linearen Vorschubbewegung entlang einer Vorschubrichtung parallel zur Werkzeugachse relativ zu dem Werkstück bewegbar ist und
a3) zusätzlich zu der linearen Vorschubbewegung eine Zirkularbewegung relativ zum Werkstück erfolgt, bei der die Werkzeugachse um eine Mittelachse parallel zur Werkzeugachse bewegbar ist,
b) und das wenigstens zwei radial von der Werkzeugachse nach außen vorstehende oder ragende, insbesondere steigungslose Drückstollen aufweist zum Erzeugen oder Nachbearbeiten eines Gewindes durch Eindrücken der Drückstollen in die Werkstückoberfläche,
c) wobei wenigstens ein Drückstollen und ein in axialer Richtung zur Werkzeugachse unmittelbar benachbarter Drückstollen um ein ganzzahliges Vielfaches der Gewindesteigung, wenigstens die zweifache Gewindesteigung, des zu erzeugenden Gewindes beabstandet sind.

Das Werkzeug gemäß den Merkmalen a1) bis a3) kann insbesondere ein Zirkulatgewindeformer oder ein Zirkulargewindeformer-Arbeitsbereich sein.

Für die Bestimmung des Abstands der Drückstollen in axialer Richtung sind die Axialpositionen der Bereiche, Flächen oder Punkte der Drückstollen, die den maximalen radialen Abstand von der Werkzeugachse aufweisen, maßgeblich. Die Axialpositionen können insbesondere anhand der axialen Abstände von der Stirnseite des Werkzeugs bestimmt werden.

Die axiale Beabstandung des wenigstens einen Drückstollens und des in axialer Richtung zur Werkzeugachse unmittelbar benachbarten Drückstollens um ein ganzzahliges Vielfaches der Gewindesteigung, wenigstens die zweifache Gewindesteigung, des zu erzeugenden Gewindes bewirkt eine Verringerung der auf das Werkzeug wirkenden Reibung, da zwischen dem wenigstens einen Drückstollen und dessen in axialer Richtung zur Werkzeugachse unmittelbar benachbarten Drückstollen keine oder nur eine geringe Formung des Gewindes erfolgt und somit an dieser Stelle auch keine oder zumindest nur eine geringe Reibung erzeugt wird. Auf diese Weise lässt sich die Standzeit des Werkzeugs in vorteilhafter Weise erhöhen, da sich die gesamte auf das Werkzeug während des Formens wirkende Reibung verringert. Das Problem der axialen Neupositionierung des Gewindeformers tritt bei der Ausführung gemäß der Erfindung jedoch dennoch nicht auf, da die Zahl der nacheinander angeordneten Drückstollen zwar reduziert sein kann, der Gewindeformer jedoch nun bevorzugt wenigstens zweimal bei Beabstandung der in zur Werkzeugachse axialer Richtung benachbarten Drückstollen um die zweifache Gewindesteigung, besonders bevorzugt wenigstens dreimal bei Beabstandung der in zur Werkzeugachse axialer Richtung benachbarten Drückstollen um die dreifache Gewindesteigung, schraubenförmig entlang des Umfangs des Werkstücks rotiert. Sind die Drückstollen in zur Werkzeugachse axialer Richtung um die n-fache Gewindesteigung beabstandet, rotiert der Gewindeformer n-mal schraubenförmig entlang des Umfangs des Werkstücks.

Mit der erfindungsgemäßen Vorrichtung sowie dem erfindungsgemäßen Verfahren lassen sich in vorteilhafter Weise einerseits Innengewinde, andererseits aber auch Außengewinde erzeugen oder nachbearbeiten.

Vorzugsweise weisen jeder Drückstollen und der in axialer Richtung benachbarte Drückstollen in axialer Richtung jeweils die gleiche Beabstandung um ein ganzzahliges Vielfaches der Gewindesteigung des zu erzeugenden Gewindes, wenigstens die zweifache Gewindesteigung, insbesondere um die zweifache Gewindesteigung, auf. Diese Ausführungsform ermöglicht eine besonders reibungsarme Erzeugung oder Nachbearbeitung eines Gewindes, da bei größerer Beabstandung die Gesamtreibung deutlich reduziert wird. Durch die gleiche Beabstandung jedes Drückstollens und des in axialer Richtung benachbarten Drückstollens ergibt sich auch eine besonders gleichmäßige Bearbeitung des Werkstücks. Besonders bevorzugt sind wenigstens ein Drückstollen und der in axialer Richtung benachbarte Drückstollen um wenigstens die dreifache, insbesondere wenigstens die vierfache Gewindesteigung beabstandet.

Vorzugsweise ist wenigstens ein Drückstollen das Werkzeug umlaufend, insbesondere entlang dessen Umfang umlaufend, ausgebildet. Diese Form ermöglicht eine besonders gute Rotationseigenschaften, da während der gesamten Rotation des Werkzeugs eine Bearbeitung des Werkstücks erfolgen kann.

Vorzugsweise umfasst wenigstens ein Drückstollen mehrere Seitenbereiche sowie wenigstens einen Zentralbereich, wobei der Zentralbereich radial weiter nach außen ragt als die Seitenbereiche. Bei dieser Ausführungsform kann die auf das Werkzeug ausübende Kraft auf die Zentralbereiche konzentriert werden, so dass sich in den Seitenbereichen während der Rotationsbewegung eine weitere Verringerung der Reibung ergibt.

Bevorzugt sind die Zentralbereiche axial benachbarter Drückstollen bezüglich der Werkzeugachse gedrallt, insbesondere schrauben- oder spiralförmig, zueinander angeordnet. Durch diese Anordnung kann das die Reduzierung der Reibung über den Verlauf der Rotationsbewegung besonders gleichmäßig erfolgen, da die Kraft während der Rotation nacheinander auf die verschiedenen Drückstollen ausgeübt wird.

Vorzugsweise umfasst das Werkzeug mehrere Reihen von Drückstollen. Die Reihen weisen jeweils wenigstens zwei Drückstollen auf, so dass die Beabstandung der axial und/oder umfangseitig benachbarten Drückstollen besonders flexibel erfolgen kann.

Vorzugsweise sind die Reihen parallel oder schrauben- oder spiralförmig zur Werkzeugachse angeordnet. Eine schrauben- oder spiralförmige Anordnung der Reihen ermöglicht eine gleichmäßige Verteilung der Reibungsspitzen über den Umfang des Werkzeugs. Jedoch kann auch eine parallele Anordnung der Reihen vorteilhaft sein, bei der die Reibungsspitzen auf wenige Winkelpositionen des Werkzeugs konzentriert werden können.

Bevorzugt sind zwischen den Reihen Nuten und/oder Kanäle zur Führung eines fluiden Mediums, insbesondere eines Kühl- und/oder Schmiermittels, angeordnet. Eine effiziente Zufuhr von Kühlmittel ist von sehr vorteilhaft für die Standzeit des Werkzeugs, da so ein Überhitzen des Werkzeugs wie auch des Werkstücks verhindert oder zumindest reduziert wird.

In einer bevorzugten Ausführungsform sind in jeder Reihe wenigstens ein Drückstollen und ein oder der in axialer Richtung benachbarte(r) Drückstollen um wenigstens die zweifache Gewindesteigung beabstandet. Dies ermöglicht eine rotationssymmetrische Reduzierung der Reibung.

Bevorzugt ist wenigstens einem Drückstollen wenigstens einer Reihe in wenigstens einer in Umfangsrichtung des Werkzeugs benachbarten Reihe ein Drückstollen benachbart. Dies ermöglicht eine Konzentration der Druckkräfte der Drückstollen auf bestimmte Axialpositionen. Besonders bevorzugt ist jedem Drückstollen jeder Reihe in jeder in Umfangsrichtung des Werkzeugs benachbarten Reihe ein Drückstollen benachbart und/oder jeder Druckstollen von dem in axialer Richtung benachbarten Drückstollen jeweils gleich weit beabstandet, vorzugsweise um die zweifache Gewindesteigung.

Bevorzugt ist wenigstens ein wenigstens einem Drückstollen in Umfangsrichtung des Werkzeugs benachbarter Drückstollen von diesem um wenigstens eine Reihe beabstandet. Dies ermöglicht eine gute Verteilung der Reibungspunkte entlang des Umfangs des Werkzeugs. Besonders bevorzugt ist jeder jedem Drückstollen in Umfangsrichtung des Werkzeugs benachbarte Drückstollen von dem wenigstens einen Drückstollen um wenigstens oder genau eine Reihe beabstandet.

Vorzugsweise sind
a) wenigstens ein erster Drückstollen in einer ersten Reihe und ein zweiter Drückstollen in einer zweiten in Umfangsrichtung des Werkzeugs zu der ersten Reihe benachbart angeordneten Reihe angeordnet,
b) wobei der dem ersten Drückstollen in einer axialen Richtung benachbarte Drückstollen um die einfache Gewindesteigung beabstandet und der dem zweiten Drückstollen in dieser axialen Richtung benachbarte Drückstollen um wenigstens die zweifache Gewindesteigung beabstandet ist.

Bei dieser Ausführungsform erfolgt die Reduzierung der Reibungskräfte sowohl in axialer Richtung als auch in Umfangsrichtung. Besonders bevorzugt setzen sich die um wenigstens die zweifache Gewindesteigung beabstandeten Drückstollen jeweils in wenigstens einer benachbarten Reihe schrauben- oder spiralförmig fort. Bei einem Gewindeformer mit vier in einem Drehsinn in Umfangsrichtung angeordneten Reihen, bei dem jeweils auf vier möglichen, in einer axialen Richtung benachbart angeordneten Positionen drei Drückstouen angeordnet sind, kann dies beispielsweise bedeuten, dass die Drückstollen der ersten Reihe auf der zweiten, dritten und vierten Position, die Drückstollen der zweiten Reihe auf der ersten, dritten und vierten Position, die Drückstollen der dritten Reihe auf der ersten, zweiten und vierten Position und die Drückstollen der vierten Reihe auf der ersten, zweiten und dritten Position angeordnet sind.

Vorzugsweise ist zwischen wenigstens einem Drückstollen und dem oder einem in axialer Richtung benachbarten Drückstollen wenigstens ein Gewindevorformbereich ausgebildet. Der Gewindevorformbereich unterstützt zu Beginn der Formung des Gewindes den Herstellungsvorgang und reduziert, wenn die Gewindegänge tiefer ausgebildet sind und die Reibungskräfte zunehmen, seinen Einfluss. Auf diese Weise erfolgt ein Ausgleich der Reibungskräfte auch über den zeitlichen Verlauf des Gewindeherstellungsvorgangs.

Bevorzugt ist wenigstens ein Drückstollen zum Nachbearbeiten und/oder Egalisieren der Gewindegänge oder Gewindeflanken des Gewindes vorgesehen. Mit Hilfe dieser Ausführungsform können in vorteilhafter Weise Unregelmäßigkeiten des Gewindes beseitigt werden.

In einer bevorzugten Ausführungsform umfasst das Werkzeug einen Trägerkörper, insbesondere einen Werkzeugschaft, bei dem wenigstens ein Drückstollen an einem vorgefertigten Teil ausgebildet ist oder aus einem vorgefertigten Teil gebildet ist und das oder jedes vorgefertigte Teil an dem Trägerkörper mittels Befestigungsmitteln befestigt ist. Eine Vorfertigung senkt die Kosten für die Herstellung des Werkzeugs, zudem lassen sich Trägerkörper einerseits und Drückstollen andererseits aus unterschiedlichen und somit für die jeweilige Aufgabe besonders gut geeigneten Materialien fertigen.

Besonders vorteilhaft ist es, wenn der Werkzeugschaft aus einem Werkzeugstahl, insbesondere einem Schnellarbeitsstahl gefertigt ist. Das kann beispielsweise ein Hochleistungsschnellstahl (HSS-Stahl) oder ein cobaltlegierter Hochleistungsschnellstahl (HSS-E-Stahl) sein. Die Gewindeerzeugungsbereiche sind im Allgemeinen aus einem Material, das härter ist als das Material des Werkstücks und ausreichende Zähigkeit aufweist, vorzugsweise aus Hartmetall oder aus einer Hartmetalllegierung, insbesondere P-Stahl oder K-Stahl oder Cermet, oder aus Sinterhartmetall, insbesondere aus Wolframkarbid oder Titannitrid oder Titankarbid oder Titankarbonitrid oder Aluminiumoxid oder aus polykristallinem Diamant (PKD) gefertigt,

Bevorzugt ist der Trägerkörper, insbesondere ein Werkzeugschaft, bei dem wenigstens ein brückstollen an dem Trägerkörper ausgebildet ist, insbesondere durch Materialabtrag wie Schleifen am Trägerkörper oder Urformen zusammen mit dem Trägerkörper erzeugt. Dies ermöglicht eine besonders stabile, insbesondere einteilige Ausführungsform, da keine Teile aneinander fixiert sind.

Vorzugsweise weist das Werkzeug wenigstens einen zusätzlichen spanabhebenden Bereich zusätzlich zu dem wenigstens einen Drückstollen auf. Bei dieser Ausführungsform kann in einem Arbeitsgang sowohl die spanabhebende als auch die spanlose Bearbeitung des Werkstücks erfolgen und somit das Gewinde sehr effizient gefertigt werden..

Bevorzugt ist
a) wenigstens ein zusätzlicher spanabhebender Bereich zum spanenden Erzeugen eines Vorgewindes in einer Werkstückoberfläche ausgebildet und vorgesehen und
b) der wenigstens eine Drückstollen zum Fertigstellen des Gewindes durch Nachbearbeiten des Vorgewindes in der Werkstückoberfläche ausgebildet und vorgesehen.

Diese Kombination ermöglicht eine besonders schnelle und/oder effiziente Fertigung eines Vorgewindes und die Fertigstellung des Gewindes in einem Arbeitsgang.

Vorzugsweise ist der wenigstens eine zusätzliche spanabhebende Bereich ein Bohrbereich und/oder ein Fräsbereich. Bei dieser Ausführungsform kann in einem Arbeitsgang sowohl das Anfertigen der Bohrung oder des Fräsbereichs als auch die Ausführung des Gewindes erfolgen.

Vorzugsweise weist das Werkzeug keinen spanabhebenden Bereich und/oder keine Schneide auf. In diesem Fall fallen keine Späne bei der Bearbeitung des Gewindes an, so dass die Handhabung des Werkzeugs deutlich vereinfacht ist.

Bevorzugt ist das Werkzeug ein Zirkulargewindeformer oder umfasst einen Zirkulargewindeformer-Arbeitsbereich. Ein Zirkulargewindeformer oder ein Zirkulargewindeformer-Arbeitsbereich kann in vorteilhafter Weise bei unterschiedlichen Gewindedurchmessern eingesetzt werden.

Außerdem wird gemäß Anspruch 18 ein Verfahren zur Erzeugung oder Nachbearbeitung eines Gewindes vorgeschlagen, bei dem
a) ein Werkzeug nach einem oder mehreren der vorhergehenden Ansprüche
a1) um seine Werkzeugachse gedreht wird,
a2) mit einer linearen Vorschubbewegung entlang einer Vorschubrichtung axial zur Werkzeugachse relativ zu dem Werkstück bewegt wird und
a3) zusätzlich zu der linearen Vorschubbewegung mit einer Zirkularbewegung relativ zum Werkstück bewegt wird, bei der die Werkzeugachse um eine Mittelachse parallel zur Werkzeugachse rotiert wird,
   b) und bei dem mit wenigstens zwei Drückstollen ein Gewinde erzeugt oder nachbearbeitet wird durch Eindrücken der wenigstens zwei Drückstollen in die Werkstückoberfläche,
   c) wobei wenigstens ein Drückstollen und wenigstens ein in zur Werkzeugachse axialer Richtung benachbarter Drückstollen des Werkzeugs um ein ganzzahliges Vielfaches der Gewindesteigung, wenigstens die zweifache Gewindesteigung, des zu erzeugenden oder nachzubearbeitenden Gewindes beabstandet in die Werkstückoberfläche eingreifen.

Durch das erfindungsgemäßer Verfahren werden während der Bearbeitung des Gewindes die Reibungskräfte sowohl am Werkzeug wie auch am Werkstück verringert. Die Anwendung des erfindungsgemäßen Verfahrens kann insbesondere bei empfindlichen oder kleinen Werkstücken besonders vorteilhaft sein. Jedoch kann die Anwendung des erfindungsgemäßen Verfahrens auch die Standzeiten des Werkzeugs verlängern.

Bevorzugt sind die Drückstollen in benachbarten Reihen so angeordnet, dass jede Gewindewindung durch jeweils wenigstens einen Drückstollen erzeugt oder nachbearbeitet wird. So kann die gleichzeitige Bearbeitung aller Gewindegänge bei verringerter Reibung erfolgen.

Vorzugsweise rotiert das Werkzeug bei der Zirkularbewegung wenigstens zweimal, besonders bevorzugt wenigstens dreimal entlang des Umfangs des Werkstücks oder um wenigstens zwei volle, besonders bevorzugt wenigstens drei volle Umdrehungen um die Mittelachse, wobei eine schraubenförmige Bewegung entlang des Umfangs des Werkstücks stattfindet. Diese Bewegung ermöglicht die Bearbeitung von Werkstücken mit einer größeren Anzahl von Gewindegängen bei gleich bleibender oder zumindest weit gehend gleich bleibender Reibung.

Die Erfindung wird im Folgenden anhand von Ausführungsbeispielen weiter erläutert. Dabei wird auch auf die Zeichnung Bezug genommen, in deren
- Figur 1: ein Zirkulargewindeformer in einer perspektivischen Ansicht
- Figur 2: der Zirkulargewindeformer gemäß Figur 1 in einer Querschnittsdarstellung in einer parallel zut Werkzeugachse A angeordneten Schnittebene,
- Figur 3: der Zirkulargewindeformer gemäß Figur 1 in einem Querschnitt in einer parallel zur Werkzeugachse A angeordneten Schnittebene innerhalb eines Werkstücks,
- Figur 4: eine weitere Aus führungsform eines Zirkulargewindeformers in einer gedrallten Anordnung in einer perspektivischen Ansicht,
- Figur 5: eine dritte Ausführungsform eines Zirkulargewindeformets in einer perspektivischen Ansicht,
- Figur 6: eine vierte Ausführungsform eines Zirkulargewindeformers in einer perspektivischen Ansicht,
- Figur 7: eine fünfte Ausführungsform eines Zirkulargewindeformers in einer perspektivischen Ansicht und
- Figur 8: eine sechste Ausführungsform eines Zirkulargewindeformers in einer gedrallten Anordnung in einer perspektivischen Ansicht ist.

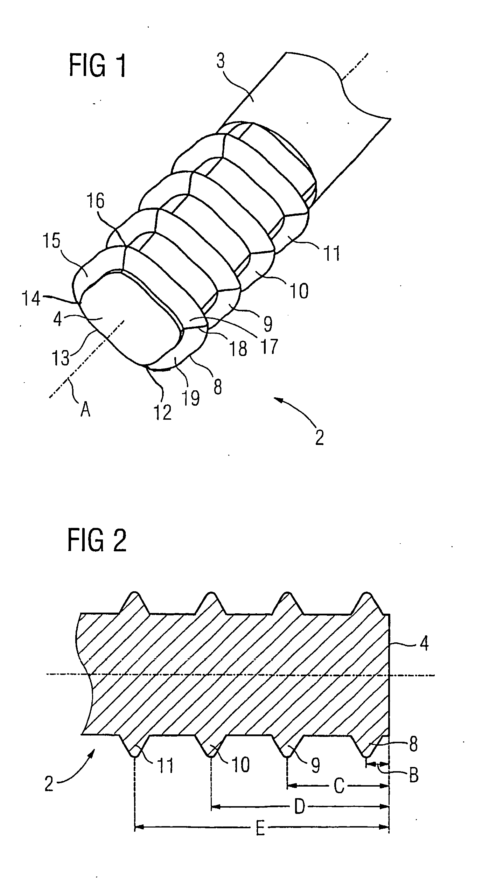

Die Figuren 1 bis 3 zeigen einen Zirkulargewindeformer 2 mit einer Werkzeugachse A in perspektivischer Ansicht mit vier Drückstollen 8, 9, 10 und 11. Der Zirkulargewindeformer 2 weist einen Werkzeugschaft 3 sowie eine vom Werkzeugschaft abgewandte Stirnseite 4 auf.

Die steigungslos ausgebildeten und angeordneten Drückstollen 8, 9, 10 und 11 umlaufen den Werkzeugschaft 3 umfangseitig und umfassen jeweils im wesentlichen geradlinig ausgebildete Seitenbereiche 13, 15, 17 und 19 sowie an den Stirnseiten der Seitenbereiche ausgebildete Zentralbereiche 12, 14, 16 und 18, die die Seitenbereiche 13, 15, 17 und 19 verbinden und radial weiter nach außen ragen als die Seitenbereiche. Die Seitenbereiche 13, 15, 17 und 19 sind im wesentlichen keilförmig ausgebildet.

Die Drückstollen 8, 9, 10 und 11 weisen jeweils eine Axialposition B, C, D und E auf, die durch deren Punkte 12, 14, 16 bzw. 18 maximalen radialen Abstands von der Werkzeugachse A anhand von deren axialem Abstand von der Stirnseite 4 des Zirkulargewindeformers 2 bestimmt wird.

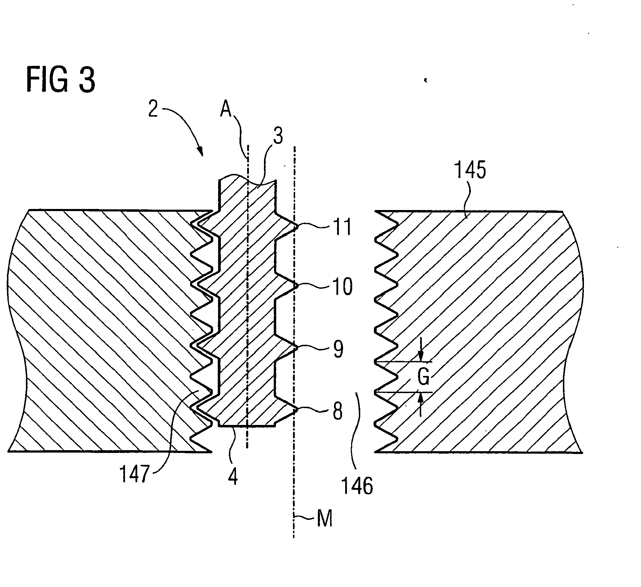

Figur 3 zeigt ein Werkstück 145 mit einem Bohrloch 146, in dem vom Zirkulargewindeformer 2 ein Gewinde 147 geformt wird. Das Gewinde weist eine Gewindesteigung G auf.

Die Drückstollen 8, 9, 10 und 11 sind in axialer Richtung in Bezug auf ihre Axialpositionen B, C, D und E jeweils um die zweifache Gewindesteigung G beabstandet angeordnet.

Zur spanlosen Erzeugung oder Nachbearbeitung des Innengewindes 147 wird der Zirkulargewindeformer 2 um seine Werkzeugachse A gedreht, mit einer linearen Vorschubbewegung entlang einer Vorschubrichtung parallel zur Werkzeugachse A relativ zu dem Werkstück 145 bewegt wird und zusätzlich zu der linearen Vorschubbewegung mit einer Zirkularbewegung relativ zum Werkstück 145 bewegt, bei der die Werkzeugachse A um eine zentrale Drehachse M parallel zur Werkzeugachse A rotiert wird.

Durch zwei Umläufe des Zirkulargewindeformers 2 um die Mittelachse M des Gewindes wird so durch Eindrücken der Drückstollen 8, 9, 10, 11 in die Werkstückoberfläche spanlos ein Gewinde 147 erzeugt oder nachbearbeitet, wobei einer der Drückstollen 8, 9, 10, 11 und der jeweils in axialer Richtung benachbarte Drückstollen in Bezug auf deren Axialpositionen um wenigstens die zweifache Gewindesteigung G beabstandet in das Gewinde eingreifen.

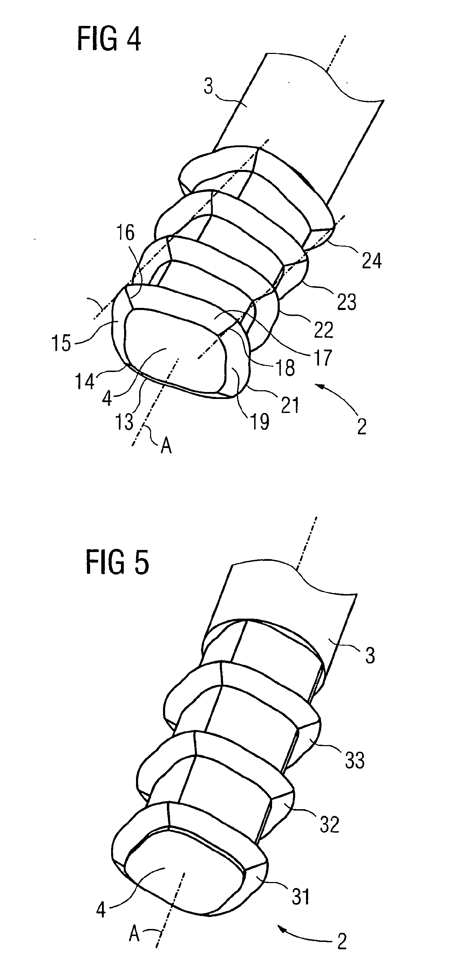

Die Figuren 4 und 5 zeigen weitere Ausführungsformen von Zirkulargewindeformern 2 mit Drückstollen 21, 22, 23 und 24 beziehungsweise Drückstollen 31, 32 und 33.

Die Drückstollen 21, 22, 23 und 24 sowie 31, 32 und 33 umlaufen den Werkzeugschaft 3 umfangsseitig und umfassen jeweils im wesentlichen geradlinig ausgebildete Seitenbereiche 13, 15, 17 und 19 sowie an den Stirnseiten der Seitenbereiche ausgebildete Zentralbereiche 12, 14, 16 und 18, die radial weiter nach außen ragenden als die Seitenbereiche. Die Drückstollen 21, 22, 23 und 24 sind im wesentlichen keilförmig ausgebildet und mit einem Winkel α zur Werkzeugachse A gegeneinander verdrallt oder schraubenförmig angeordnet.

Die Drückstollen 31, 32 und 33 sind in axialer Richtung jeweils um die dreifache Gewindesteigung G beabstandet angeordnet.

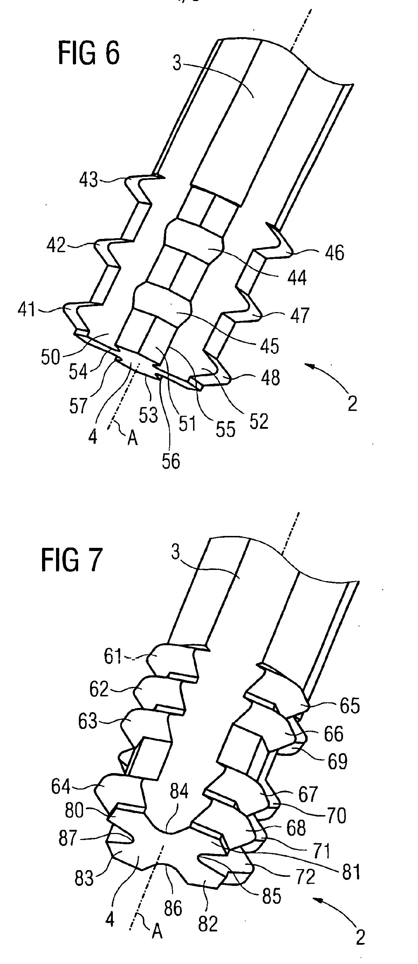

Die Figuren 6 bis 8 zeigen Drückstollen, die in jeweils vier entlang des Umfangs des Werkzeugschafts 3 parallel oder schraubenförmig zur Werkzeugachse angeordneten Reihen 50, 51, 52 und 53 beziehungsweise 80, 81, 82 und 83 beziehungsweise 120, 121, 122 und 123 angeordnet sind. Die Reihen sind durch Kanäle 54, 55, 56 und 57 beziehungsweise 84, 85, 86 und 87 beziehungsweise 124, 125, 126 und 127 insbesondere zur Führung eines Kühl- oder Schmiermittels getrennt.

In Figur 6 sind in jeder der Reihen 50, 51, 52 und 53 Drückstollen 41, 42 und 43, bzw. 44 und 45, bzw. 46, 47 und 48 angeordnet, die in axialer Richtung um jeweils die zweifache Gewindesteigung G beabstandet sind,

Jeder einem ersten Drückstollen 41, 42 und 43, bzw. 44 und 45, bzw. 46, 47 und 48 entlang der Umfanglinie des Werkzeugs 2 benachbarte zweite Drückstollen ist von dem ersten Drückstollen um eine Reihe beabstandet. Die Drückstollen gemäß Figur 6 sind insofern sowohl axial als auch entlang der Umfanglinie des Werkzeugs 2 alternierend angeordnet,

In Figur 7 sind in jeder der Reihen 80, 81, 82 und 83 jeweils mehrere Drückstollen 61, 62, 63 und 64, bzw. 65, 66, 67 und 68, bzw. 69, 70, 71 und 72 angeordnet, wobei von den in einer der Reihen 80, 81 bzw. 82 angeordneten Drückstollen jeweils zwei Drückstollen 63 und 64, 66 und 67 bzw. 69 und 70 um die zweifache Gewindesteigung G beabstandet sind, die übrigen Drückstollen um die einfache Gewindesteigung G beabstandet angeordnet sind. Die Beabstandung um die zweifache Gewindesteigung G der Drückstollen 63 und 64, 66 und 67 bzw. 69 und 70 setzt sich jeweils in benachbarten Reihen schraubenförmig fort.

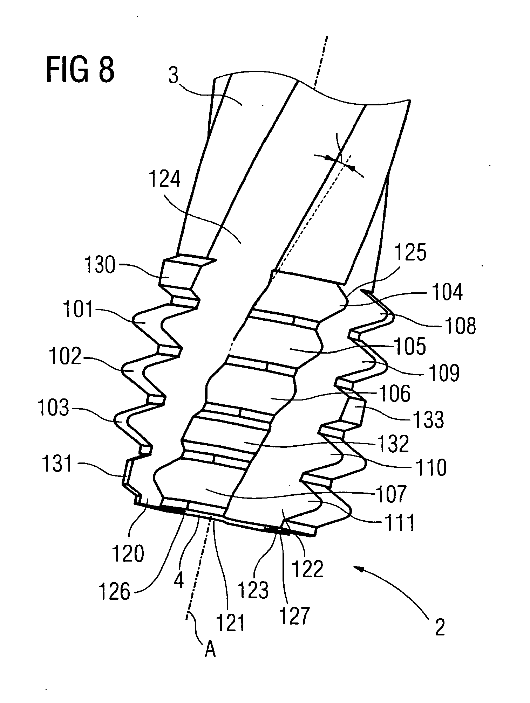

In Figur 8 sind in jeder der Reihen 120, 121, 122 und 123 drei bzw, vier Drückstollen 101, 102 und 103, bzw. 104, 105, 106 und 107, bzw. 108, 109, 110 und 111 angeordnet, wobei von den in einer der Reihen 121, 122 bzw. 123 angeordneten Drückstollen jeweils zwei Drückstollen 106 und 107 bzw. 109 und 110 um die zweifache Gewindesteigung G beabstandet sind, die übrigen Drückstollen um die einfache Gewindesteigung G beabstandet angeordnet sind. Die um die zweifache Gewindesteigung G beabstandeten Drückstollen setzen sich bei der in Figur 8 gezeigten Ausführungsform in benachbarten Reihen schraubenförmig fort. Zusätzlich sind noch die Reihen unter dem Winkel β zur Werkzeugachse A gedrallt oder schraubenförmig angeordnet.

Zwischen den um die zweifache Gewindesteigung G beabstandeten Drückstollen 107 und 106 beziehungsweise 109 und 110 sind Gewindevorformbereiche 132 beziehungsweise 133 angeordnet, die eine trapezartige Form aufweisen. Weitere Gewindevorformbereiche 130 beziehungsweise 131 sind benachbart zu den Drückstollen 101 beziehungsweise 103 angeordnet.

Zusätzlich zu den bezeichneten Drückstollen beziehungsweise Gewindevorformbereichen können bei dem gezeigten Ausführungsformen auch weitere, nicht bezeichnete rückseitig angeordnete, Drückstollen beziehungsweise Gewindevorformbereiche vorhanden sein.

Bei jeder der gezeigten Ausführungsformen können schaftseitig weitere Drückstollen analog zu den in den Figuren gezeigten Drückstollen angeordnet sein.

### Bezugszeichenliste

- 2: Zirkulargewindeformer
- 3: Werkzeugschaft
- 4: Stirnseite

- 8 bis 11: Drückstollen

- 12: Zentralbereich
- 13: Seitenbereich
- 14: Zentralbereich
- 15: Seitenbereich
- 16: Zentralbereich
- 17: Seitenbereich
- 18: Zentralbereich
- 19: Seitenbereich

- 21 bis 24: Drückstollen
- B, C, D, E: Axialpositionen
- 31 bis 34: Drückstollen
- 41 bis 48: Drückstollen
- 50 bis 53: Reihe
- 54 bis 57: Nut
- 61 bis 72: Drückstollen
- 80 bis 83: Reihe
- 84 bis 87: Nut
- 101 bis 111: Drückstollen

- 120 bis 123: Reihe
- 124 bis 127: Nut
- 130 bis 133: Gewindevorformbereich
- 141 bis 143: Drückstollen

- 145: Werkstück
- 146: Bohrung
- 147: Gewinde

- A: Werkzeugachse
- G: Gewindesteigung
- M: Mittelachse
- α,β: Drallwinkel

## Patentansprüche

1. Werkzeug (2) zur Erzeugung oder Nachbearbeitung eines Gewindes,
a1) das um seine Werkzeugachse (A) drehbar ist,
a2) mit einer linearen Vorschubbewegung entlang einer Vorschubrichtung parallel zur Werkzeugachse relativ zu dem Werkstück (145) bewegbar ist und
a3) zusätzlich zu der linearen Vorschubbewegung eine Zirkularbewegung relativ zum Werkstück (145) erfolgt, bei der die Werkzeugachse (A) um eine Mittelachse (M) parallel zur Werkzeugachse (A) bewegbar ist,
b) und das wenigstens zwei radial von der Werkzeugachse (A) nach außen vorstehende oder ragende, insbesondere steigungslose Drückstollen (8, 9, 10, 11, ...) aufweist zum Erzeugen oder Nachbearbeiten eines Gewindes (147) durch Eindrücken der Drückstollen (8, 9, 10, 11, ...) in die Werkstückoberfläche,
c) **dadurch gekennzeichnet, dass** wenigstens ein Drückstollen (8, 9, 10, 11, ...) und ein in axialer Richtung zur Werkzeugachse unmittelbar benachbarter Drückstollen um ein ganzzahliges Vielfaches der Gewindesteigung, wenigstens die zweifache Gewindesteigung, des zu erzeugenden Gewindes (G) beabstandet sind.

2. Werkzeug nach Anspruch 1, wobei jeder Drückstollen (8, 9, 10, 11, ...) und der in axialer Richtung benachbarte Drückstollen in axialer Richtung jeweils die gleiche Beabstandung um ein ganzzahliges Vielfaches der Gewindesteigung, wenigstens die zweifache Gewindesteigung, des zu erzeugenden Gewindes (G) aufweisen.

3. Werkzeug nach Anspruch 1 oder 2, wobei wenigstens ein Drückstollen (31, 32, 33) und der in axialer Richtung benachbarte Drückstollen um wenigstens die dreifache oder die vierfache Gewindesteigung (G) beabstandet sind.

4. Werkzeug nach einem der vorhergehenden Ansprüche, wobei wenigstens ein Drückstollen (8, 9, 10, 11, ...) das Werkzeug (2) umlaufend, insbesondere entlang dessen Umfang umlaufend, ausgebildet ist.

5. Werkzeug nach einem der vorhergehenden Ansprüche, wobei wenigstens ein Drückstollen (8, 9, 10, 11, ...) mehrere Seitenbereiche (13, 15, 17, 19) sowie wenigstens einen Zentralbereich (12, 14, 16, 18) umfasst, wobei der Zentralbereich radial weiter nach außen ragt als die Seitenbereiche.

6. Werkzeug nach Anspruch 5, wobei die Zentralbereiche (12, 14, 16, 18) axial benachbarter Drückstollen (8, 9, 10, 11, ...) bezüglich der Werkzeugachse gedrallt, insbesondere schrauben- oder spiralförmig, zueinander angeordnet sind.

7. Werkzeug nach einem der vorhergehenden Ansprüche, wobei das Werkzeug (2) mehrere Reihen (50, 51, 52, 53, ...) von Drückstollen (41, 42, 43, 44, 45, ...) umfasst.

8. Werkzeug nach Anspruch 7, wobei die Reihen (50, 51, 52, 53, ...) parallel, spiral- oder schraubenförmig zur Werkzeugachse angeordnet sind und/oder wobei zwischen den Reihen (50, 51, 52, 53, ...) Nuten und/oder Kanäle (54, 55, 56, 57, ...) zur Führung eines fluiden Mediums, insbesondere eines Kühl- und/oder Schmiermittels, angeordnet sind.

9. Werkzeug nach Anspruch 7 oder 8, wobei in jeder Reihe (50, 51, 52, 53, ...) wenigstens ein Drückstollen (41, 42, 43, 44, 45, ...) und der oder ein in axialer Richtung benachbarte(r) Drückstollen um wenigstens die zweifache Gewindesteigung (G) beabstandet sind und/oder wobei wenigstens einem Drückstollen wenigstens einer Reihe in wenigstens einer in Umfangsrichtung des Werkzeugs benachbarten Reihe ein Drückstollen benachbart ist und/oder wobei wenigstens ein wenigstens einem Drückstollen (41, 42, 43) in Umfangsrichtung des Werkzeugs benachbarter Drückstollen (46, 47, 48) von dem wenigstens einen Drückstollen (41, 42, 43) um wenigstens eine Reihe (51) beabstandet ist.

10. Werkzeug nach einem der Ansprüche 7 bis 9,
a) wobei wenigstens ein erster Drückstollen (62) in einer ersten Reihe (80) und ein zweiter Drückstollen (66) in einer zweiten in Umfangsrichtung des Werkzeugs zu der ersten Reihe (80) benachbart angeordneten Reihe (81) angeordnet sind,
b) wobei der dem ersten Drückstollen (62) in einer axialen Richtung benachbarte Drückstollen (63) um die einfache Gewindesteigung (G) beabstandet und der dem zweiten Drückstollen (66) in dieser axialen Richtung benachbarte Drückstollen (67) um wenigstens die zweifache Gewindesteigung (G) beabstandet ist.

11. Werkzeug nach Anspruch 10, wobei sich die um wenigstens die zweifache Gewindesteigung G beabstandeten Drückstollen (63, 64, 66, 67) jeweils in wenigstens einer benachbarten Reihe spiral- oder schraubenförmig fortsetzen.

12. Werkzeug nach einem der vorhergehenden Ansprüche, wobei zwischen wenigstens einem Drückstollen (109) und dem oder einem in axialer Richtung benachbarten Drückstollen (110) wenigstens ein Gewindevorformbereich (132) ausgebildet ist und/oder bei dem wenigstens ein Drückstollen (8, 9, 10, 11, ...) zum Nachbearbeiten und/oder Egalisieren der Gewindegänge oder Gewindeflanken des Gewindes vorgesehen ist.

13. Werkzeug nach einem der vorhergehenden Ansprüche mit einem Trägerkörper, insbesondere einem Werkzeugschaft, bei dem wenigstens ein Drückstollen (8, 9, 10, 11, ...) an einem vorgefertigten Teil ausgebildet ist oder aus einem vorgefertigten Teil gebildet ist und das oder jedes vorgefertigte Teil an dem Trägerkörper mittels Befestigungsmitteln befestigt ist und/oder mit einem Trägerkörper, insbesondere einem Werkzeugschaft (3), bei dem wenigstens ein Drückstollen (8, 9, 10, 11, ...) an dem Trägerkörper ausgebildet ist, insbesondere durch Materialabtrag wie Schleifen am Trägerkörper oder Urformen zusammen mit dem Trägerkörper erzeugt ist.

14. Werkzeug nach einem oder mehreren der vorhergehenden Ansprüche mit wenigstens einem zusätzlichen spanabhebenden Bereich zusätzlich zu dem wenigstens einen Drückstollen (8, 9, 10, 11, ...).

15. Werkzeug nach Anspruch 14, bei dem
a) wenigstens ein zusätzlicher spanabhebender Bereich zum spanenden Erzeugen eines Vorgewindes in einer Werkstückoberfläche ausgebildet und vorgesehen ist und bei dem
b) der wenigstens eine Drückstollen (8, 9, 10, 11, ...) zum Fertigstellen des Gewindes durch Nachbearbeiten des Vorgewindes in der Werkstückoberfläche ausgebildet und vorgesehen ist
und/oder bei dem der wenigstens eine zusätzliche spanabhebende Bereich ein Bohrbereich und/oder ein Fräsbereich ist.

16. Werkzeug nach einem der Ansprüche 1 bis 13, das keinen spanabhebenden Bereich und/oder keine Schneide aufweist.

17. Werkzeug nach einem der Ansprüche 1 bis 16, wobei das Werkzeug ein Zirkulargewindeformer ist oder einen Zirkulargewindeformer-Arbeitsbereich umfasst.

18. Verfahren zur Erzeugung oder Nachbearbeitung eines Gewindes, bei dem
a) ein Werkzeug (2) nach einem oder mehreren der vorhergehenden Ansprüche
a1) um seine Werkzeugachse (A) gedreht wird,
a2) mit einer linearen Vorschubbewegung entlang einer Vorschubrichtung axial zur Werkzeugachse relativ zu dem Werkstück (145) bewegt wird und
a3) zusätzlich zu der linearen Vorschubbewegung mit einer Zirkularbewegung relativ zum Werkstück (145) bewegt wird, bei der die Werkzeugachse (A) um eine Mittelachse (M) parallel zur Werkzeugachse (A) rotiert wird,
b) und bei dem mit wenigstens zwei Drückstollen (8, 9, 10, 11, ...) ein Gewinde (147) erzeugt oder nachbearbeitet wird durch Eindrücken der wenigstens zwei Drückstollen (8, 9, 10, 11, ...) in die Werkstückoberfläche,
c) wobei wenigstens ein Drückstollen (8, 9, 10, 11, ...) und wenigstens ein in zur Werkzeugachse axialer Richtung benachbarter Drückstollen des Werkzeugs um ein ganzzahliges Vielfaches der Gewindesteigung, wenigstens die zweifache Gewindesteigung (G), des zu erzeugenden oder nachzubearbeitenden Gewindes beabstandet in die Werkstückoberfläche eingreifen.

19. Verfahren nach Anspruch 18, bei dem die Drückstollen (41, 42, 43, 44, 45, ...) in benachbarten Reihen (50, 51, 52, 53, ...) so angeordnet sind, dass jede Gewindewindung durch jeweils wenigstens einen Drückstollen erzeugt oder nachbearbeitet wird.

20. Verfahren nach Anspruch 18 oder 19,
bei dem das Werkzeug bei der Zirkularbewegung (145) wenigstens zweimal entlang des Umfangs des Werkstücks (145) oder um wenigstens zwei volle Umdrehungen um die Mittelachse (M) rotiert und/oder bei dem das 5 Werkzeug bei der Zirkularbewegung (145) wenigstens dreimal entlang des Umfangs des Werkstücks (145) oder um wenigstens drei volle Umdrehungen um die Mittelachse (M) rotiert.

## Claims

1. Tool (2) for the production or finishing of a thread,
a1) which is rotatable about its tool axis (A),
a2) can be moved with a linear feed motion along a feed direction parallel to the tool axis relative to the workpiece (145) and
a3) additionally to the linear feed motion, follows a circular motion relative to the workpiece (145), with which the tool axis (A) can be moved about a central axis (M) parallel to the tool axis (A),
b) and which comprises at least two in particular pitchless pressure elements (8, 9, 10, 11, etc) extending or protruding radially outward from the tool axis (A) for the production or finishing of a thread (147) by pressing the pressure elements (8, 9, 10, 11, etc) into the surface of the workpiece,
c) **characterised in that** at least one pressure element (8, 9, 10, 11, etc) and an immediately adjacent pressure element in the axial direction to the tool axis are spaced apart by an integral multiple of the thread pitch, at least twice the thread pitch, of the thread (G) to be produced.

2. Tool according to claim 1, wherein each pressure element (8, 9, 10, 11, etc) and the adjacent pressure element in the axial direction each have the same spacing apart in the axial direction by an integral multiple of the thread pitch, at least twice the thread pitch of the thread (G) to be produced.

3. Tool according to claim 1 or 2, wherein at least one pressure element (31, 32, 33) and the adjacent pressure element in the axial direction are spaced apart by at least three times or four times the thread pitch (G).

4. Tool according to any one of the preceding claims, wherein at least one pressure element (8, 9, 10, 11, etc) is embodied rotating about the tool (2), in particular rotating along its circumference.

5. Tool according to any one of the preceding claims, wherein at least one pressure element (8, 9, 10, 11, etc) comprises a plurality of side regions (13, 15, 17, 19) and at least one central region (12, 14, 16, 18), wherein the central region protrudes further radially outward than the side regions.

6. Tool according to claim 5, wherein the central regions (12, 14, 16, 18) of axially adjacent pressure elements (8, 9, 10, 11, etc), are arranged with respect to the tool axis twisted, in particular helically or spirally, toward each other.

7. Tool according to any one of the preceding claims, wherein the tool (2) comprises a plurality of rows (50, 51, 52, 53, etc) of pressure elements (41, 42, 43, 44, 45, etc).

8. Tool according to claim 7, wherein the rows (50, 51, 52, 53, etc) are arranged in parallel, spirally or helically with respect to the tool axis and/or wherein grooves and/or channels (54, 55, 56, 57, etc) are arranged between the rows (50, 51, 52, 53, etc) to guide a fluid medium, in particular a coolant and/or lubricant.

9. Tool according to claim 7 or 8, wherein in each row (50, 51, 52, 53, etc) at least one pressure element (41, 42, 43, 44, 45, etc) and the or one pressure element adjacent in the axial direction are spaced apart by at least twice the thread pitch (G) and/or wherein a pressure element is adjacent to at least one pressure element in at least one row in at least one adjacent row in the circumferential direction of the tool and/or wherein an at least one pressure element (46, 47, 48) adjacent to at least one pressure element (41, 42, 43) in the circumferential direction of the tool pressure elements is spaced apart from the at least one pressure element (41, 42, 43) by at least one row (51).

10. Tool according to any one of claims 7 to 9,
a) wherein at least one first pressure element (62) is arranged in a first row (80) and one second pressure element (66) is arranged in a second row arranged adjacent to the first row (81) in the circumferential direction of the tool (80),
b) wherein the pressure element (63) adjacent to the first pressure element (62) in an axial direction is spaced apart by one thread pitch (G) and the pressure element (67) adjacent to the second pressure element (66) in this axial direction is spaced apart by at least twice the thread pitch (G).

11. Tool according to claim 10, wherein the pressure elements (63, 64, 66, 67) spaced apart by at least twice the thread pitch G each continue spirally or helically in at least one adjacent row.

12. Tool according to any one of the preceding claims, wherein, embodied between at least one pressure element (109) and the or one adjacent pressure element (110) in the axial direction, there is at least one thread preform region (132) and/or with which at least one pressure element (8, 9, 10, 11, etc) is provided for the finishing and/or equalisation of the thread grooves or thread flanks of the thread.

13. Tool according to any one of the preceding claims with a carrier body, in particular a tool shaft, with which at least one pressure element (8, 9, 10, 11, etc) is embodied on a prefabricated part or formed from a prefabricated part and the or each prefabricated part is fastened to the carrier body by means of fastening means and/or with a carrier body, in particular a tool shaft (3), with which at least one pressure element (8, 9, 10, 11, etc) is embodied on the carrier body and produced in particular by material abrasion, such as grinding, on the carrier body or moulding together with the carrier body.

14. Tool according to one or more of the preceding claims with at least one additional metal-cutting region in addition to the at least one pressure element (8, 9, 10, 11, etc).

15. Tool according to claim 14, with which
a) at least one additional metal-cutting region for the metal-cutting production of a pre-thread is embodied and provided in a workpiece surface and with which
b) the at least one pressure element (8, 9, 10, 11, etc) is embodied and provided for completing the thread by finishing the pre-thread in the workpiece surface
and/or with which the at least one additional metal-cutting region is a drilling region and/or a milling region.

16. Tool according to any one of claims 1 to 13, which does not comprise any metal-cutting region and/or any cutting edge.

17. Tool according to any one of claims 1 to 16, wherein the tool is a circular thread cutter or comprises a circular thread cutter working region.

18. Method for the production or finishing of a thread, with which
a) a tool (2) according to one or more of the preceding claims
a1) is rotated about its tool axis (A),
a2) is moved with a linear feed motion along a feed direction axially to the tool axis relative to the workpiece (145) and
a3) additionally to the linear feed motion is moved with a circular motion relative to the workpiece (145), with which the tool axis (A) is rotated about a central axis (M) parallel to the tool axis (A),
b) and with which, with at least two pressure elements (8, 9, 10, 11, etc), a thread (147) is produced or finished by pressing the at least two pressure elements (8, 9, 10, 11, etc) into the workpiece surface,
c) wherein at least one pressure element (8, 9, 10, 11, etc) and at least one adjacent pressure element of the tool in the axial direction to the tool axis spaced apart by a integral multiple of the thread pitch, at least twice the thread pitch (G), of the thread to be produced or finished engage in the workpiece surface.

19. Method according to claim 18, with which the pressure elements (41, 42, 43, 44, 45, etc) are arranged in adjacent rows (50, 51, 52, 53, etc) in such a way that each thread winding is produced or finished in each case by at least one pressure element.

20. Method according to claim 18 or 19,
with which, during the circular motion (145), the tool rotates at least twice along the circumference of the workpiece (145) or by at least two full rotations about the central axis (M) and/or with which, during the circular motion (145), the tool rotates at least three times along the circumference of the workpiece (145) or by at least three full rotations about the central axis (M).

## Revendications

1. Outil (2) pour la réalisation ou la rectification d'un filetage,
a1) qui est apte à tourner autour de son axe (A),
a2) est apte à se déplacer par rapport à la pièce à fileter (145), avec un mouvement d'avance linéaire suivant une direction d'avance parallèle à l'axe de l'outil,
a3) effectue, en plus du mouvement linéaire, un mouvement circulaire par rapport à la pièce à fileter (145), pendant lequel l'axe (A) de l'outil peut se déplacer autour d'un axe médian (M) parallèle à l'axe (A) de l'outil,
b) et qui comporte au moins deux cannelures de repoussage (8, 9, 10, 11, ...) en particulier sans pente, qui s'avancent ou s'engagent radialement vers l'extérieur à partir de l'axe (A) de l'outil et qui sont destinées à réaliser ou rectifier un filet (147) moyennant l'enfoncement des cannelures de repoussage (8, 9, 10, 11, ...) dans la surface de la pièce à fileter,
c) **caractérisé en ce qu'**au moins une des cannelures de repoussage (8, 9, 10, 11, ...) et une cannelure de repoussage directement adjacente dans la direction axiale par rapport à l'axe de l'outil sont écartées l'une de l'autre d'un distance correspondant à un multiple entier des pas de filetage (G) à réaliser.

2. Outil selon la revendication 1, dans lequel chaque cannelure de repoussage (8, 9, 10, 11, ...) et la cannelure de repoussage directement adjacente dans la direction axiale sont écartées dans la direction axiale selon la même distance correspondant à un multiple entier du pas de filetage, au moins le double du pas de filetage (G) à réaliser.

3. Outil selon la revendication 1 ou 2, dans lequel au moins une cannelure de repoussage (31, 32, 33) et la cannelure de repoussage adjacente dans la direction axiale sont situées l'une de l'autre à une distance correspondant au moins au triple ou au quadruple du pas de filetage (G).

4. Outil selon l'une quelconque des revendications précédentes, dans lequel au moins une cannelure de repoussage (8, 9, 10, 11, ...) est configurée autour de l'outil (2), en particulier suivant le pourtour de celui-ci.

5. Outil selon l'une quelconque des revendications précédentes, dans lequel au moins une cannelure de repoussage (8, 9, 10, 11, ...) comprend plusieurs zones latérales (13, 15, 17, 19), ainsi qu'au moins une zone centrale (12, 14, 16, 18), la zone centrale s'avançant radialement vers l'extérieur davantage que les zones latérales.

6. Outil selon la revendication 5, dans lequel les zones centrales (12, 14, 16, 18) des cannelures de repoussage (8, 9, 10, 11, ...) axialement adjacentes sont disposées entre elles en étant vrillées par rapport à l'axe de l'outil, en particulier en hélice ou en spire.

7. Outil selon l'une quelconque des revendications précédentes, dans lequel l'outil (2) comprend plusieurs rangées (50, 51, 52, 53, ...) de cannelures de repoussage (41, 42, 43, 44, 45, ...).

8. Outil selon la revendication 7, dans lequel les rangées (50, 51, 52, 53, ...) sont disposées parallèlement, en spire ou en hélice par rapport à l'axe de l'outil, et/ou dans lequel entre les rangées (50, 51, 52, 53, ...) sont disposées des rainures et/ou des canaux (54, 55, 56, 57, ...) pour la circulation d'un agent fluide, en particulier d'un agent de refroidissement et/ou d'un agent de lubrification.

9. Outil selon la revendication 7 ou 8, dans lequel dans chaque rangée (50, 51, 52, 53, ...), au moins une cannelure de repoussage (41, 42, 43, 44, 45, ...) et la ou une cannelure de repoussage adjacente dans la direction axiale sont écartées l'une de l'autre d'une distance correspondant au moins au double du pas de filetage (G), et/ou dans lequel au moins une cannelure de repoussage d'au moins une rangée est adjacente à une cannelure de repoussage dans au moins une rangée adjacente dans la direction circonférentielle de l'outil, et/ou dans lequel au moins une cannelure de repoussage (46, 47, 48), adjacente à au moins une cannelure de repoussage (41, 42, 43) dans la direction circonférentielle de l'outil, est écartée de ladite au moins une cannelure de repoussage (41, 42, 43) par au moins une rangée (51).

10. Outil selon l'une quelconque des revendications 7 à 9,
a) dans lequel au moins une première cannelure de repoussage (62) est disposée dans une première rangée (80) et une deuxième cannelure de repoussage (66) est disposée dans une deuxième rangée (81) adjacente à la première rangée (80) dans la direction circonférentielle de l'outil,
b) dans lequel la cannelure de repoussage (63) adjacente à la première cannelure de repoussage (62) dans une direction axiale est écartée d'une distance correspondant à un pas de filetage (G), et la cannelure de repoussage (67) adjacente à la deuxième cannelure de repoussage (66) dans cette direction axiale est écartée d'une distance correspondant au moins au double du pas de filetage (G).

11. Outil selon la revendication 10, dans lequel les cannelures de repoussage (63, 64, 66, 67), écartées d'une distance correspondant au moins au double du pas de filetage (G), se prolongent chacune en spire ou en hélice dans au moins une rangée adjacente.

12. Outil selon l'une quelconque des revendications précédentes, dans lequel entre au moins une cannelure de repoussage (109) et la ou une cannelure de repoussage (110) adjacente dans la direction axiale est réalisée au moins une zone de préformage du filet (132), et/ou dans lequel au moins une cannelure de repoussage (8, 9, 10, 11, ...) est prévue pour la rectification et/ou l'égalisation des pas de filetage ou des flancs du filetage.

13. Outil selon l'une quelconque des revendications précédentes, comportant un corps de support, en particulier une tige de l'outil, dans lequel au moins une cannelure de repoussage (8, 9, 10, 11, ...) est réalisée sur une partie préfabriquée ou est formée par une partie préfabriquée, et la ou chaque partie préfabriquée est fixée au corps de support par des moyens de fixation, et/ou comportant un corps de support, en particulier une tige (3) de l'outil, dans lequel au moins une cannelure de repoussage (8, 9, 10, 11, ...) est réalisée sur le corps de support, en particulier par enlèvement de matière sur le corps de support, tel que le meulage, ou est réalisée par formage primaire conjointement avec le corps de support.

14. Outil selon une ou plusieurs des revendications précédentes, comportant au moins une zone supplémentaire travaillant par enlèvement de copeaux en plus de ladite au moins une cannelure de repoussage (8, 9, 10, 11, ...).

15. Outil selon la revendication 14, dans lequel
a) au moins une zone supplémentaire travaillant par enlèvement de copeaux est réalisée et prévue pour usiner par enlèvement de copeaux un filetage préliminaire dans une surface de la pièce à fileter, et dans lequel
b) ladite au moins une cannelure de repoussage (8, 9, 10, 11, ...) est réalisée et prévue pour réaliser le filetage par la rectification du filetage préliminaire dans la surface de la pièce à fileter,
et/ou dans lequel ladite au moins une zone supplémentaire travaillant par enlèvement de copeaux est une zone de perçage et/ou une zone de fraisage.

16. Outil selon l'une quelconque des revendications 1 à 13, qui ne comporte pas de zone travaillant par enlèvement de copeaux et/ou ne comporte pas de tranchant.

17. Outil selon l'une quelconque des revendications 1 à 16, dans lequel l'outil est un outil circulaire à mouler les filets ou comprend une zone de travail d'un outil circulaire à mouler les filets.

18. Procédé pour la réalisation ou la rectification d'un filet, selon lequel
a) un outil (2) selon une ou plusieurs des revendications précédentes
a1) est entraîné en rotation autour de son axe (A),
a2) est déplacé par rapport à la pièce à fileter (145), avec un mouvement d'avance linéaire suivant une direction d'avance axialement à l'axe de l'outil,
a3) est déplacé, en plus du mouvement linéaire, avec un mouvement circulaire par rapport à la pièce à fileter (145), pendant lequel l'axe (A) de l'outil est entraîné en rotation autour d'un axe médian (M) parallèle à l'axe (A) de l'outil,
b) et selon lequel un filet (147) est réalisé ou rectifié par l'enfoncement desdites au moins deux cannelures de repoussage (8, 9, 10, 11, ...) dans la surface de la pièce à fileter,
c) selon lequel au moins une des cannelures de repoussage (8, 9, 10, 11, ...) et au moins une cannelure de repoussage de l'outil, adjacente dans la direction axiale par rapport à l'axe de l'outil, entrent en prise dans la surface de la pièce à fileter à une distance l'une de l'autre correspondant à un multiple entier du pas de filetage, au moins au double du pas de filetage (G) du filet à réaliser ou à rectifier.

19. Procédé selon la revendication 18, selon lequel les cannelures de repoussage (41, 42, 43, 44, 45, ...) dans des rangées (50, 51, 52, 53, ...) adjacentes sont agencées de telle sorte que chaque pas de filetage est réalisé ou rectifié dans chaque cas par au moins une cannelure de repoussage.

20. Procédé selon la revendication 18 ou 19, selon lequel l'outil, pendant le mouvement circulaire (145), tourne au moins deux fois sur le pourtour de la pièce à fileter (145) ou tourne sur au moins deux rotations complètes autour de l'axe médian (M), et/ou selon lequel l'outil, pendant le mouvement circulaire (145), tourne au moins trois fois sur le pourtour de la pièce à fileter (145) ou tourne sur au moins trois rotations complètes autour de l'axe médian (M).
